# EUROPEAN PATENT APPLICATION

(11) **EP 4 809 802 A1**
(43) Date of publication of application: **23.09.2026**
(21) Application number: 26163588.2
(22) Date of filing: 10.03.2026
(51) Int. Cl.: A01C 11/02

(54) **DISTRIBUTION ASSEMBLY FOR AGRICULTURAL TRANSPLANTING MACHINES**

(30) Priority: 17.03.2025 IT 202500005316
(71) Applicant: Checchi e Magli S.r.l., 40054 Budrio BO (IT)
(72) Inventor: LAZZARI, Lorenzo, 40061 MINERBIO BO (IT)
(74) Representative: Modiano, Micaela Nadia

(57) **Abstract**

A distribution assembly for agricultural transplanting machines (100), which is configured to move plant elements (B) intended for transplanting, each comprising a base substrate (C) and a seedling (D) coupled to the substrate (C), comprising at least:
- a pair of first sandwich belt conveyors (2) which are configured to hold plant elements (B) by the respective substrates (C) and move them along a first portion of a trajectory (A),
- a pair of second sandwich belt conveyors (3) which can move at a higher speed than the first sandwich belt conveyors (2) and are configured to hold plant elements (B) by the respective substrates (C) and move them along a second portion of the trajectory (A), downstream of the first portion,
- a pair of third sandwich belt conveyors (4) which are configured to hold plant elements (B) by the respective seedlings (D) and move them along a third portion of the trajectory (A), downstream of the second portion,
- a pair of fourth sandwich belt conveyors (5) which are configured to hold plant elements (B) and move them along a fourth portion of the trajectory (A), downstream of the third portion.

## Description

The present invention relates to a distribution assembly for agricultural transplanting machines, and the related agricultural machine.

As is known, among the various types of agricultural machines, transplanting machines are widespread and are used to transplant, along a stretch of land, seedlings which have already been partially germinated in another growth location. Evidently, the use of such machines makes it possible to automate (at least partially) an activity that, if performed manually as in the past, is particularly burdensome for the laborers involved and requires decidedly more time (often unacceptable for the needs of the market), with a consequent limit on the hourly productivity that can be obtained.

The machines of the type described above therefore comprise a frame which can be coupled to a tractor, so that it can be towed along the ground of interest, a hopper or a magazine for receiving the seedlings (typically fixed to a respective substrate, of the type for example of a plug of turf), a furrowing apparatus which opens the furrow along the soil intended to receive the seedlings, and optional apparatuses capable of closing the furrow again once transplantation is complete.

Furthermore, the transplanting machine comprises means for manipulation and movement, which according to various methods retrieve the seedlings from the hopper (or from the magazine) and lay them in the furrow just opened, in order to perform the transplantation.

In particular, such means comprise a distribution assembly which receives the seedlings and releases them one by one, at regular time intervals, into the furrow, so as to obtain a distribution as uniform as possible of the seedlings along the ground, which end up at a constant distance (spacing) from each other along one or more parallel rows (parallel to each other and parallel to the advancement direction imposed by the tractor).

Such assemblies are also not devoid of drawbacks, however.

In fact it has been observed that often the conventional assemblies are not capable of ensuring the uniformity of the spacing, meaning the distance between consecutive transplanted seedlings, except at the cost of constant adjustments made by an operator on board, which moreover are difficult to make when (as is increasingly frequently the case) high productivity is required of the machine.

Furthermore, it is known that in the hopper or in the magazine there are (in some cases, even in very high percentages, up to 30%-35%) missed plugs, which are made up of substrates without seedlings: conventional distribution assemblies are not capable of identifying these and eliminating them effectively, and the consequence is that plugs or other "sterile" substrates are transplanted into the soil, which evidently reduces the yield for the same surface (in the same percentage as the percentage of such missed plugs in the hopper).

The aim of the present invention is to solve the above-mentioned problems, by providing a distribution assembly for agricultural transplanting machines that is capable of performing the deposit in the soil of plant elements which comprise a seedling and the associated substrate, in an effective manner and while ensuring the automatic rejection of missed plugs.

Within this aim, an object of the invention is to provide an agricultural transplanting machine that is capable of performing the deposit in the soil of plant elements which comprise a seedling and the associated substrate, in an effective manner and while ensuring the automatic rejection of missed plugs.

Another object of the invention is to provide a distribution assembly and an agricultural machine that are capable of ensuring uniformity of distribution and therefore a constant spacing of the seedlings transplanted in the soil.

Another object of the invention is to provide a distribution assembly and an agricultural transplanting machine that overcome the drawbacks of the prior art in a different manner to any existing solutions.

Another object of the invention is to provide a distribution assembly and an agricultural transplanting machine that are highly reliable and certain to be safe in use.

Another object of the invention is to provide a distribution assembly and an agricultural transplanting machine that can be implemented relatively simply and at low cost.

This aim and these and other objects which will become more apparent hereinafter are achieved by a distribution assembly according to claim 1 and by an agricultural transplanting machine according to claim 10, optionally provided with one or more of the characteristics of the dependent claims.

Further characteristics and advantages of the invention will become more apparent from the detailed description that follows of a preferred, but not exclusive, embodiment of the distribution assembly and of the agricultural transplanting machine according to the invention, which is illustrated by way of non-limiting example in the accompanying drawings wherein:
Figure 1 is a perspective view of the distribution assembly according to the invention, seen from the rear and from the side;

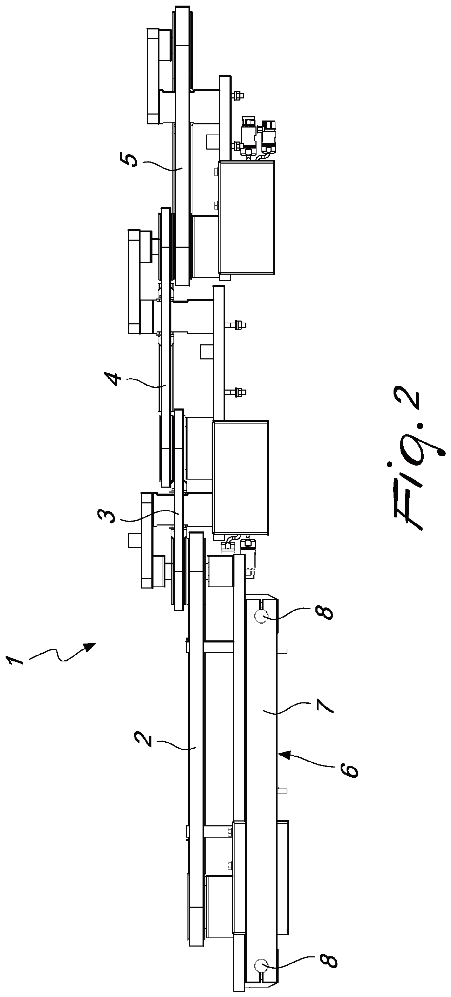

Figure 2 is a side view of the distribution assembly of Figure 1;
Figure 3 is another perspective view of the operation of the distribution assembly according to the invention, seen from the rear and from the side;

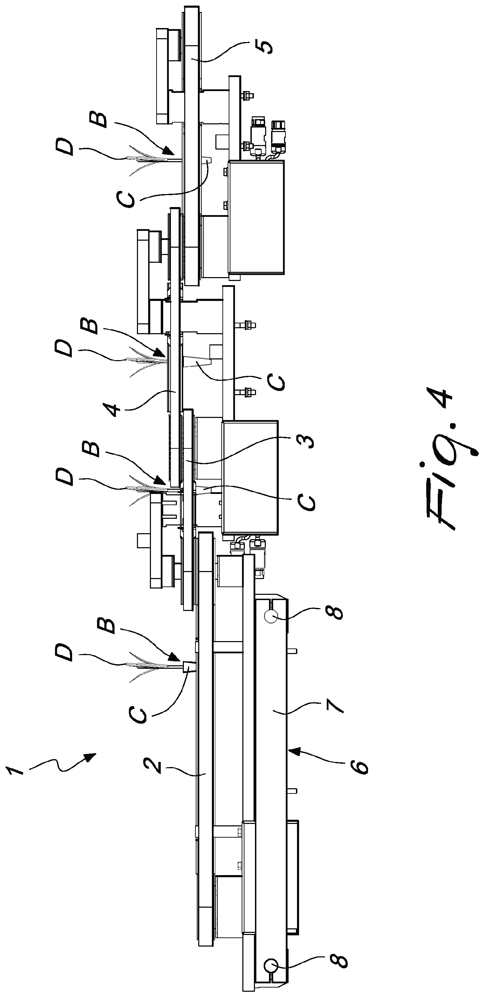

Figure 4 is a side view of the operation of the distribution assembly as in Figure 3;
Figure 5 is a perspective view of the agricultural machine according to the invention, seen from the rear and from the side;
Figure 6 is a perspective view of a portion of the agricultural machine of Figure 5, seen from the rear and from the side.

With particular reference to the figures, the reference numeral 1 generally designates a distribution assembly for agricultural transplanting machines, which in turn is designated by the reference numeral 100.

The following pages will describe the configuration of a possible transplanting machine 100 designed to incorporate one or more assemblies 1 (and which is also the subject matter of the protection claimed herein), but it should be made clear from this point onward that the scope of protection claimed herein must be understood as extending to any agricultural machine that comprises one or more assemblies 1, and also to the use, the exploitation, the production, the sale or the offer for sale of assemblies 1, be they fitted as standard on any agricultural machine or supplied separately.

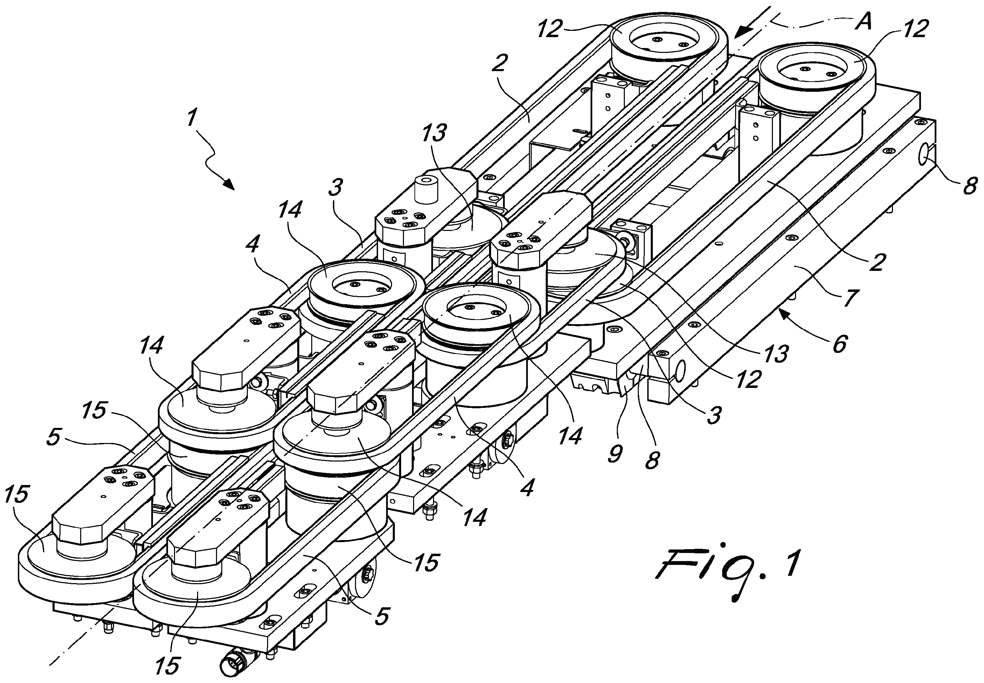

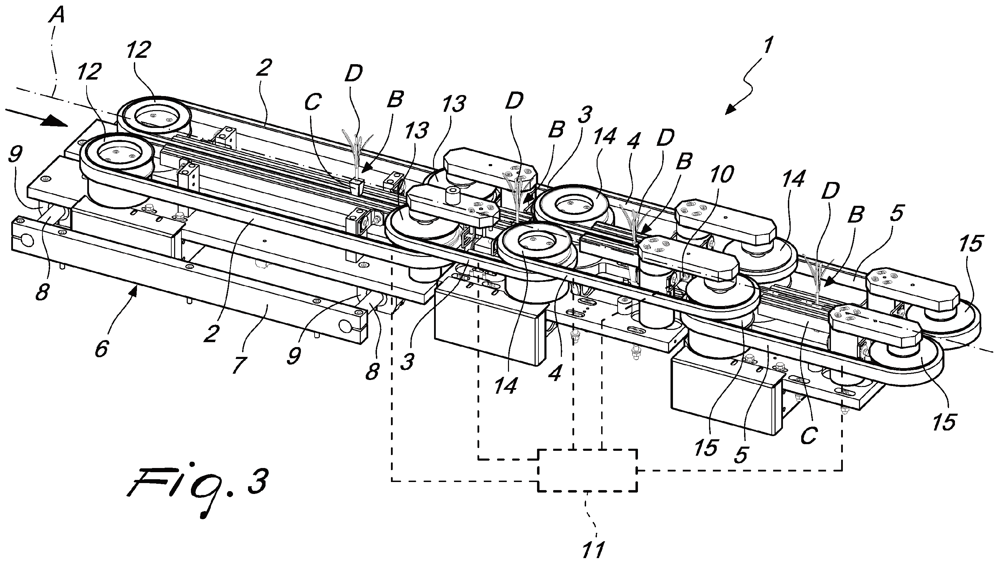

The assembly 1 is configured to move, along a predefined trajectory A (shown for the sake of simplicity only in Figures 1 and 3), plant elements B intended for transplanting, each of which comprises a base substrate C and a seedling D, which is coupled (stably) to the substrate C.

The seedlings D can be any plant variety that has undergone a first life cycle (or which has at least partially germinated) in another cultivation location (a nursery seed tray, a greenhouse, etc). The substrate C, for example, can be a plug of turf or of another material.

The trajectory A along which the plant elements B are moved is typically horizontal and straight, although it is also possible for it to assume other shapes or orientations, according to the specific requirements.

According to the invention, the assembly 1 comprises at least one pair of mutually adjacent first sandwich belt conveyors 2, which are configured to hold the plant elements B by the respective substrates C and move them (one after the other) along a first portion of the trajectory A, by virtue of their capacity to move close together.

The first belts 2 can be made of any material deemed adequate; as shown in the accompanying figures they are preferably closed in a loop to form two elongated longitudinal segments, one of which faces and is proximate to a corresponding longitudinal segment of the other, so as to delimit a gap between them (oriented along the trajectory A and corresponding effectively to the previously mentioned first portion of this trajectory), in which a plant element B can be accommodated, held by friction by the first belts 2 and moved along the first portion while the belts move close together.

The plant elements B can be delivered to the first belts 2 according to various methods, while remaining within the scope of protection claimed herein. Typically, at the moment of delivery (and for the entire travel imposed by the assembly 1) the plant elements B are arranged vertically (i.e., with the stem of the seedlings D vertical) and with the substrate C in a downward region; effectively, they are in the same orientation that they are intended to assume in the soil.

Furthermore, according to the invention the distribution assembly 1 comprises at least one pair of mutually adjacent second sandwich belt conveyors 3, which can be moved at a higher speed than the speed of the first belts 2. The second belts 3 are configured to hold the plant elements B by the respective substrates C and to move them (one after the other) along a second portion of the trajectory A, (immediately) downstream of the first portion, by virtue of their capacity to move close together.

The second portion is contiguous with the first portion. Effectively therefore, the second belts 3 receive the plant elements B directly from the first portion (from the first belts 2) and continue their movement along the trajectory A.

In the present discussion the terms "upstream" and "downstream" are used (in accordance with common practice) with reference to the direction and orientation of advancement imposed on the plant elements B along the trajectory A (the direction is indicated by an arrow in Figures 1 and 3).

It should be noted that in the present discussion, whenever reference is made to the speed of the belts (be they the first belts 2, the second belts 3, or belts that will be introduced below), it should be understood as referring to the speed at which the belts move together.

As a consequence of the greater speed of the second belts 3, the plant elements B therefore move more rapidly in the second portion than in the first.

This increase in speed results in a greater spacing apart between consecutive plant elements B: this makes it possible to disentangle their foliage, preventing any damage to the seedlings D.

The second belts 3 can also be made of any material deemed adequate; as shown in the accompanying figures they are preferably closed in a loop to form two elongated longitudinal segments, one of which faces and is proximate to a corresponding longitudinal segment of the other, so as to delimit a gap between them (oriented along the trajectory A and corresponding effectively to the previously mentioned second portion of this trajectory), in which a plant element B can be located, delivered by the first belts 2 and then held by friction by the second belts 3, which move it along the second portion as they move close together.

Furthermore, according to the invention the distribution assembly 1 comprises at least one pair of mutually adjacent third sandwich belt conveyors 4, which are configured to hold the plant elements B by the respective seedlings D (and not by the substrates C) and move them (one after the other) along a third portion of the trajectory A, (immediately) downstream of the second portion, by virtue of their capacity to move close together.

The third portion is contiguous with the second portion. Effectively therefore, the third belts 4 receive the plant elements B directly from the second portion (from the second belts 3) and continue their movement along the trajectory A.

The third belts 4 can also be made of any material deemed adequate; as shown in the accompanying figures they are preferably closed in a loop to form two elongated longitudinal segments, one of which faces and is proximate to a corresponding longitudinal segment of the other, so as to delimit a gap between them (oriented along the trajectory A and corresponding effectively to the previously mentioned third portion of this trajectory), in which a plant element B can be located, delivered by the second belts 3 and then held by friction by the third belts 4, which move it along the third portion as they move close together.

The choice to configure the third belts 4 so that they hold the plant elements B by the seedlings D (of the stem or of the foliage, for example) and not by the substrates C is of the greatest practical interest: any missed plugs constituted by plant elements B comprising only the substrate C (which can occasionally be presented and be delivered to the first belts 2) cannot be held by the third belts 4 and will fall by gravity into the area below, where an expulsion duct or other contrivance can be arranged. Thus, along the third portion the adjusting movement continues solely for those plant elements B that include a seedling D, and only these are delivered downstream.

Advantageously, to ensure that the third belts 4 automatically hold the plant elements B by the seedlings D and not by the substrates C, the third belts 4 can be arranged at a higher vertical height than that of the second belts 3 (the difference in vertical elevation being chosen conveniently). Thus, automatically and without the need for further contrivances, at the moment of the handover from the second belts 3 to the third belts 4 the plant elements B go from being held by the substrate C to being held by the seedlings D.

As shown in the accompanying figures, the first belts 2 and the second belts 3 can also be placed at different vertical heights, which in this case are chosen so as to ensure the holding is by the substrate C.

Preferably, the third belts 4 move (slide close together) at the same speed as the second belts 3: this makes it possible to limit or cancel out the risk of problems which otherwise may arise, by virtue of the change in the manner of holding (which could cause an unwanted inclination of the seedlings D or a deterioration of the substrates C).

It is emphasized however that, in the handover from the first belts 2 to the second belts 3 (at which point, as has been seen, the plant elements B accelerate), the risk of such problems arising is in any case low or nil, precisely because the first belts 2 and the second belts 3 always hold the plant elements B by the substrate C.

Furthermore, according to the invention the distribution assembly 1 comprises at least one pair of mutually adjacent fourth sandwich belt conveyors 5, which are configured to hold the plant elements B (preferably by the substrates C) and move them (one after the other) along a fourth portion of the trajectory A, downstream of the third portion, by virtue of their capacity to move close together.

The fourth portion is contiguous with the third portion. Effectively therefore, the fourth belts 5 receive the plant elements B directly from the third portion (from the third belts 4) and continue their movement along the trajectory A.

The fourth belts 5 can also be made of any material deemed adequate; as shown in the accompanying figures they are preferably closed in a loop to form two elongated longitudinal segments, one of which faces and is proximate to a corresponding longitudinal segment of the other, so as to delimit a gap between them (oriented along the trajectory A and corresponding effectively to the previously mentioned fourth portion of this trajectory), in which a plant element B can be located, delivered by the third belts 4 and then held by friction by the fourth belts 5, which move it along the fourth portion as they move close together.

As shown in the accompanying figures, the fourth belts 5 can be arranged at a lower vertical height (chosen conveniently) than the third belts 4, so as to automatically hold the plant elements B by the substrates C and no longer by the seedlings D.

Preferably, the fourth belts 5 move (slide close together) at a higher speed than the speed of the third belts 4. By virtue of the higher speed, the fourth belts 5 ensure an additional uniform spacing apart of the plant elements B (and of the seedlings D in particular) in order to make sure, once again, that their corresponding foliage can be mutually disentangled, and prevent, upon its release by the fourth belts 5, a seedling D from being entangled with the adjacent one, which would compromise the evenness of distribution for the contrivances downstream and/or the release onto the ground.

It should be noted in this regard that at the end of the fourth portion the fourth belts 5 and, more generally, the assembly 1 according to the invention, limit their activity to releasing the plant elements B one by one, and these can simply be deposited on the ground (by gravity) or handed over to other devices which are responsible for managing or facilitating the release, in order to obtain the transplantation.

Usefully, the assembly 1 comprises a movement apparatus 6 for the first belts 2 along a translation axis which is transverse to the trajectory A, between a first configuration and a second configuration. The transverse translation axis is typically horizontal and perpendicular to the trajectory A.

In the first configuration (Figure 3), the first belts 2 are mutually closer together in order to hold between them and move the plant elements B, according to the methods and purposes described above.

By contrast, in the second configuration (Figure 1) the first belts 2 are mutually spaced apart in order to allow the placement of the plant elements B between them. The placement can be performed manually by the operators or, preferably, using a dedicated contrivance; in any case, the greater spacing evidently makes it possible to position the plant elements B with care, so guarding against any risk of damage. The placement can be performed for one plant element B at a time or, preferably, for a plurality of plant elements B at each cycle, with the plant elements B in this case being arranged between the first belts 2 already in succession one after the other along the first portion.

In an embodiment of significant practical interest, illustrated in the accompanying figures for the purposes of non-limiting example of application of the invention, the movement apparatus 6 comprises a pair of fixed supporting plates 7, which are arranged parallel to each other on the sides of the trajectory A. Furthermore, the movement apparatus 6 comprises at least two transverse bars 8 (perpendicular to the plates 7), which are interposed between the plates 7 (and supported by the latter) and which define respective sliding guides per corresponding sliders 9, which are integral with corresponding first belts 2. The movement of the sliders 9, and therefore of the first belts 2, between the first and the second configuration can be obtained in basically any manner, while remaining within the scope of protection claimed herein.

Usefully, the assembly 1 can comprise at least one detection sensor 10 configured to verify the presence of a plant element B at a predefined point of the third portion. The detection sensor 10 can be chosen to be of any type, from those that the person skilled in the art will be capable of identifying as indicated for the role described above.

Furthermore, the assembly 1 can also comprise a control and management unit 11 for at least the second belts 3 and/or the third belts 4 (and optionally also for the first belts 2 and/or the fourth belts 5), which is equipped with instructions for adjusting the movement speed at least of the second belts 3 and/or of the third belts 4 on the basis of the information acquired by the detection sensor 10, in order to ensure or at least favor the delivery at a constant rate of the plant elements B to the fourth belts 5.

The electronic unit 11 is shown only schematically in the accompanying Figure 3 but it can be of conventional type, and for example it can comprise or be constituted by a controller, a PLC, a computer, another form of hardware, reprogrammable or otherwise (for example with a microprocessor).

Typically, the electronic unit 11 is the same unit that governs the entire assembly 1 and optionally the entire machine 100. However, the possibility is not ruled out that the electronic unit 11 can be a dedicated electronic contrivance, to be mounted on the assembly 1 and intended to interact with the other components described herein solely for the purposes that the invention sets out to achieve.

More generally however, all the functions that will be described in the discussion below for the electronic unit 11 can be executed using software and/or hardware components that the person skilled in the art is capable of selecting, drawing on common knowledge of the sector.

The role performed by the unit 11, using the information acquired by the detection sensor 10, is of significant practical interest. In fact, as has been seen, along the third portion the plant elements B automatically fall under the third belts 4, without proceeding their travel further along the trajectory A. This evidently causes a variation in the spacing between the plant elements B (meaning the distance between two consecutive plant elements B). The information acquired by the detection sensor 10 enable the unit 11 to identify such situations and to remedy them, by temporarily accelerating the second belts 3 and/or the third belts 4, so as to restore the desired spacing. This ensures that plant elements B are delivered to the fourth belts 5 with a constant frequency (and that these plant elements B are deposited and transplanted along the ground at a uniform distance from each other).

It is also possible to equip the assembly 1 with an additional control system (one or more further sensors for example) which verifies the presence of the plant elements B at a predefined point of the fourth portion, and preferably at an end portion of the latter. The additional control system first of all contributes to restoring the uniformity of the spacing: if the acceleration imposed on the plant elements B along the second and/or the third portion was not sufficient to restore the desired spacing (for example because two or more consecutive defective plant elements B were dropped earlier), the unit 11 (which can control the control system) can (temporarily) increase the speed of the fourth belts 5 and obtain the desired restoration of the spacing.

Furthermore, the control system can enable the unit 11 to synchronize the release of the plant elements B downstream of the fourth belts 5 with optional contrivances arranged downstream, with which the machine 100 could be equipped for example in order to better handle the deposit and the transplantation in the soil.

If the speed of the fourth belts 5 is changed, the unit 11 can, if necessary, as a consequence also vary the speed of the first belts 2 and/or of the second belts 3 and/or of the third belts 4, according to a master/slave logic.

Usefully, in the embodiment shown in the accompanying figures for the purposes of non-limiting example of the invention, each first belt 2, second belt 3, third belt 4 and fourth belt 5 comprises a band which is wound around a pair of respective first pulleys 12, second pulleys 13, third pulleys 14 and fourth pulleys 15, preferably with a vertical axis. One pulley 12, 13, 14, 15 of each pair can be conveniently motorized, so as to enable the respective belt 2, 3, 4, 5 to slide on it and to move the plant elements B in the ways explained above.

The embodiment described above can in any case be adopted for none, only one (selectively), or only some (selectively) of the belts 2, 3, 4, 5; the scope of protection claimed herein in fact extends to the adoption of any embodiment for the belts 2, 3, 4, 5.

Advantageously, it is possible for:
- a first pulley 12 (the downstream one) of each first belt 2 to be arranged coaxial with a second pulley 13 (the upstream one) of a respective second belt 3, and/or
- the other second pulley 13 (the downstream one) of each second belt 3 to be arranged coaxial with a third pulley 14 (the upstream one) of a respective third belt 4, and/or
- the other third pulley 14 (the downstream one) of each third belt 4 to be arranged coaxial with a fourth pulley 15 (the upstream one) of a respective fourth belt 5.

This configuration makes it possible to contain the overall encumbrance of the assembly 1, with evident benefits in terms of space occupation.

Although confirming that the belts 2, 3, 4, 5 can be made of any material, while remaining within the scope of protection claimed herein, preferably such material (and also the pressure that the belts 2, 3, 4, 5 exert on the plant elements B while holding them) is chosen so as to not result in any damage, to the benefit of the increased probability of radication of the transplanted seedling D.

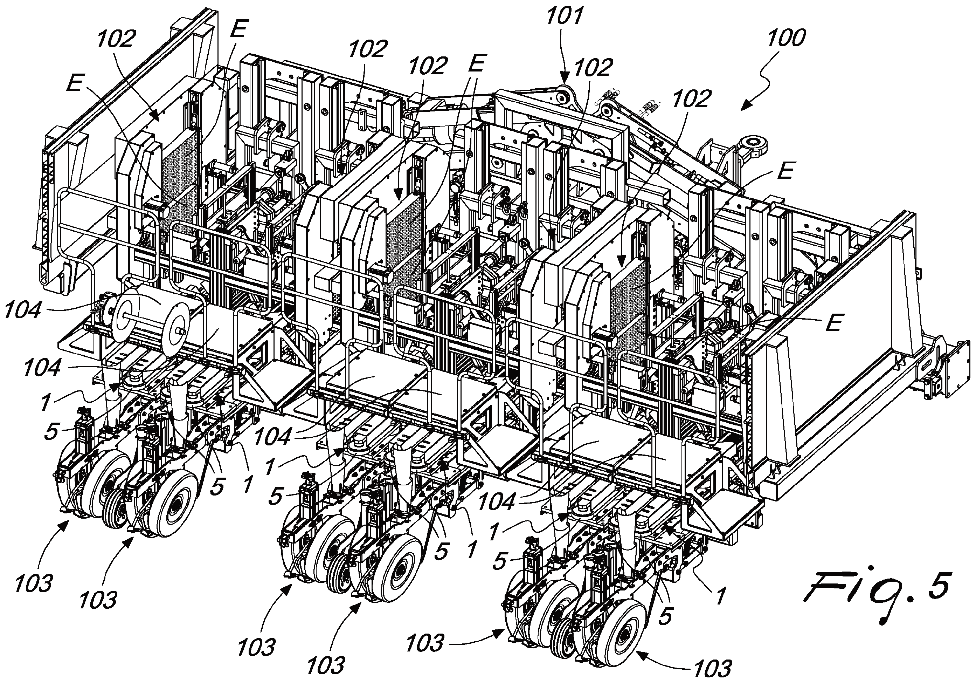

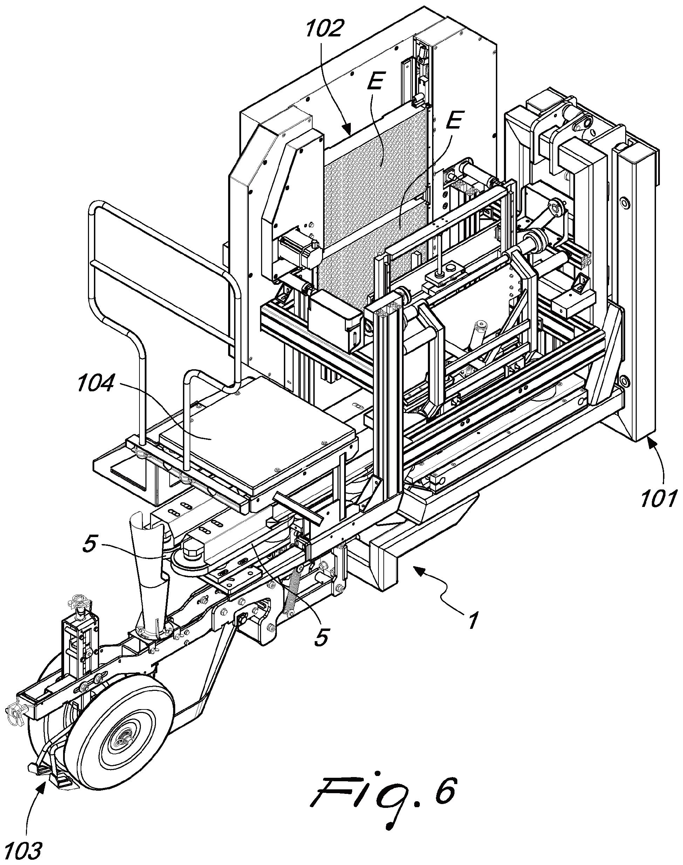

As mentioned above, in addition to the assembly 1, protection is also claimed herein for an agricultural transplanting machine 100, of which an example embodiment (which should not be understood as in any way limiting of the scope of protection) is shown in Figures 5 and 6.

The machine 100 comprises at least one supporting frame 101; the frame 101 can be configured to be coupled to a farm tractor (not shown in the accompanying figures, but which can be conventional).

Furthermore, it is also possible to install the machine 100 on a self-propelled vehicle, so as to make the machine 100 usable even in the absence of tractors.

The coupling and/or the installation can be done in any way that the person skilled in the art deems appropriate. The frame 101 can also be collapsible, in order to enable a temporary reduction in the bulk (in particular the transverse footprint) of the machine 100 and so facilitate road travel.

Furthermore, the machine 100 comprises at least one magazine 102 for accommodating plant elements B intended for transplanting, each comprising a base substrate C and a seedling D coupled to the substrate C. These are the plant elements B described in the foregoing pages. The magazine 102 can comprise a compartment for accommodating nursery seed trays E containing the plant elements B to be transplanted; furthermore, the magazine 102 can be optionally provided with an apparatus for moving the trays E forward and/or ejecting the empty trays E. The magazine 102 can be provided in any manner, while remaining within the scope of protection claimed herein. Typically, the magazine 102 is supported directly or indirectly by the frame 101.

Furthermore, the machine 100 comprises at least one furrowing apparatus 103, which is configured to provide a furrow along the soil, during the advancement of the frame 101 (and of the entire machine 100).

The furrowing apparatus device 103 can be provided in any manner, while remaining within the scope of protection claimed herein. Typically, the furrowing apparatus 103 is also supported directly or indirectly by the frame 101.

Furthermore, the machine 100 comprises movement means for the plant elements B, which are configured to retrieve the plant elements B from the magazine 102 (and therefore, for example, from the trays E) and to deliver them to the furrowing apparatus 103.

Typically, the movement means too are supported directly or indirectly by the frame 101.

The machine 100 can further be provided with one or more walkable platforms 104, which make it possible for operators to perform the operations to supply each magazine 102 and to load/unload full/empty trays E.

According to the invention, the movement means comprise at least one distribution assembly 1 according to what is shown in the foregoing pages. The movement means can further comprise other contrivances, including conventional devices, for transferring the plant elements B from the magazine 101 to the assembly 1.

Effectively therefore, the plant elements B are delivered to the furrowing apparatus 103 after they have travelled the trajectory A, downstream of the fourth belts 5.

By virtue of the electronic unit 11 and the control system described in the foregoing pages, it is with the furrowing apparatus 103 that the unit 11 can synchronize the release of the plant elements B downstream of the fourth belts 5.

As shown in the accompanying figures, preferably the machine 100 is of the modular type: it can comprise a plurality of modules side-by-side (there are six in Figure 5); each module (like the module in Figure 6) comprises a magazine 102, a furrowing apparatus 103, and an assembly 1. Each module places plant elements B to be transplanted along the ground, forming a respective row, parallel to the advancement direction.

The operation of the distribution assembly 1 and of the agricultural transplanting machine 100 according to the invention can be easily understood from the foregoing pages, but in any case, a brief summary is also given below.

The assembly 1 and the machine 100 can be made advance along the ground of interest using a tractor or by being installed on a self-propelled vehicle, and during the advancement the machine 100 transplants the plant elements B that were previously contained in the magazine 102 in the soil; the assembly 1 makes it possible to distribute the plant elements B in a regular and uniform manner, with constant spacing.

In more detail, the plant elements B are supplied to the assembly 1 (from the magazine 102 or in another manner), where they are placed one after the other between the first belts 2 (first spaced apart in the second configuration, as in Figure 1); the latter belts subsequently press around them and hold them by the substrate C, while making them advance along the first portion. The first belts 2 deliver the plant elements B to the second belts 3, which again hold them by the substrate C but transports them at a higher speed, so as to mutually disentangle the foliage and guard against the risk of subsequent malfunction that could otherwise arise, if the plant elements B are mutually intertwined or braided.

The second belts 3 deliver the plant elements B to the third belts 4, which are arranged so as to hold the plant elements B not by the substrate C, but by the seedling D. Thus, those plant elements B (which may be present in the magazine 102 or may have been delivered to the assembly 1), in which the seedling D is absent or has not grown sufficiently, are automatically discarded.

The third belts 4 deliver the plant elements B to the fourth belts 5, which hold them once again by the substrate C and move them along the fourth portion, until their final release downstream, preferably adding another increase in speed in order to further mutually disentangle the foliage.

The electronic unit 11 then restores the spacing and the frequency of delivery/transplantation of the plant elements B, accelerating the movement of the latter after one or more discards, and synchronizing the flow and the delivery of plant elements B downstream with the furrowing apparatus 103.

Downstream of the assembly 1, the machine 100 can perform the transplantation using the furrowing apparatus 103.

In practice it has been found that the distribution assembly 1 and the agricultural transplanting machine 100 according to the invention fully achieve the set aim and objects, in that the plant elements B travel the trajectory A (the first portion, the second portion, the third portion and the fourth portion), while they are held in sequence by the first belts 2, by the second belts 3, by the third belts 4 and by the fourth belts 5, which move at different speeds and hold them by the substrate C or by the seedling D, and this makes it possible to perform the deposit in the soil of the plant elements B in an effective manner while ensuring the automatic discard of missed plugs.

The assembly 1 and the machine 100 are capable of automatically discarding defective plant elements B, without compromising the uniformity of distribution and therefore a constant spacing along the ground of the plant elements B that are effectively transplanted.

During the travel along the trajectory A (and optionally during substantially the entire path from the magazine 102 to the soil), the seedling D is kept vertical (with the substrate C in a downward region); this makes it possible to reduce problems of stress to which it could otherwise be subjected, and favors a quantitative and qualitative improvement in production, by virtue of an increased probability of radication in the field.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102025000005316 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each object identified by way of example by such reference signs.

## Claims

1. A distribution assembly for agricultural transplanting machines (100), which is configured to move, along a predefined trajectory (A), plant elements (B) intended for transplanting, each comprising a base substrate (C) and a seedling (D) coupled to the substrate (C), **characterized in that** it comprises at least:
- a pair of first sandwich belt conveyors (2) which are mutually laterally adjacent and are configured to hold plant elements (B) by the respective substrates (C) and move them along a first portion of said trajectory (A),
- a pair of second sandwich belt conveyors (3) which are mutually laterally adjacent, can move at a higher speed than said first belts (2) and are configured to hold plant elements (B) by the respective substrates (C) and move them along a second portion of said trajectory (A), downstream of said first portion,
- a pair of third sandwich belt conveyors (4) which are mutually laterally adjacent and are configured to hold plant elements (B) by the respective seedlings (D) and move them along a third portion of said trajectory (A), downstream of said second portion,
- a pair of fourth sandwich belt conveyors (5) which are mutually laterally adjacent and are configured to hold plant elements (B) and move them along a fourth portion of said trajectory (A), downstream of said third portion.

2. The distribution assembly according to claim 1, **characterized in that** it comprises a movement apparatus (6) for said first belts (2) along a translation axis which is transverse to said trajectory (A), between a first configuration, in which said first belts (2) are mutually closer together in order to hold between them and move said plant elements (B), and a second configuration, in which said first belts (2) are mutually spaced apart for the placement of plant elements (B) between them.

3. The distribution assembly according to claim 2, **characterized in that** said movement apparatus (6) comprises a pair of fixed supporting plates (7), which are arranged in a parallel configuration on the sides of said trajectory (A), and at least two transverse bars (8), which are interposed between said plates (7) and define respective sliding guides for corresponding sliders (9), which are integral with corresponding said first belts (2).

4. The distribution assembly according to claim 1, **characterized in that** said third sandwich belt conveyors (4) move at the same speed as said second sandwich belt conveyors (3).

5. The distribution assembly according to claim 1, **characterized in that** said third sandwich belt conveyors (4) are arranged at a higher vertical elevation than said second sandwich conveyors (3).

6. The distribution assembly according to claim 1, **characterized in that** said fourth sandwich belt conveyors (5) move at a higher speed than said third sandwich belt conveyors (4).

7. The distribution assembly according to one or more of the preceding claims, **characterized in that** it comprises at least one detection sensor (10) which is configured to check for the presence of a plant element (B) at a predefined point of said third portion, and a control and management unit (11) for at least said second sandwich belt conveyors (3) and/or said third belts (4), which is equipped with instructions for adjusting the movement speed of at least said second sandwich belt conveyors (3) and/or third belts (4) based on the information acquired by said detection sensor (10) and for delivering plant elements (B) at a constant rate to said fourth sandwich belt conveyors (5).

8. The distribution assembly according to one or more of the preceding claims, **characterized in that** each one of said first sandwich belt conveyors (2), second sandwich belt conveyors (3), third sandwich belt conveyors (4) and fourth sandwich belt conveyors (5) comprises a band which is wound around a pair of respective first pulleys (12), second pulleys (13), third pulleys (14) and fourth pulleys (15), preferably with a vertical axis.

9. The distribution assembly according to one or more of the preceding claims, **characterized in that**:
- a said first pulley (12) of each of said first sandwich belt conveyors (2) is arranged coaxially to one said second pulley (13) of a respective said second sandwich belt conveyor (3), and/or
- the other said second pulley (13) of each of said second sandwich belt conveyors (3) is arranged coaxially to a said third pulley (14) of a respective said third sandwich belt conveyor (4), and/or
- the other said third pulley (14) of each of said third belts (4) is arranged coaxially to a said fourth pulley (15) of a respective said fourth sandwich belt conveyor (5).

10. An agricultural transplanting machine comprising at least:
- a supporting frame (101),
- a magazine (102) for accommodating plant elements (B) intended for transplanting, each comprising a base substrate (C) and a seedling (D) coupled to the substrate (C),
- a furrowing apparatus (103), configured to provide a furrow along the ground, during the advancement of said frame (101),
- movement means for plant elements (B), which are configured to retrieve plant elements (B) from said magazine (102) and deliver them to said furrowing apparatus (103),
**characterized in that** said movement means comprise at least one distribution assembly (1) according to one or more of the preceding claims.
